Europäisches Patentamt

European Patent Office

Office européen des brevets

(11) Numéro de publication: **0 211 790**
**A1**

# (12) DEMANDE DE BREVET EUROPEEN

(21) Numéro de dépôt: 86450017.8

(22) Date de dépôt: 04.08.86

(51) Int. Cl.⁴: **F04B 21/00** , **F04B 21/04** ,
**F16J 15/44**

(30) Priorité: 06.08.85 FR 8512184

(43) Date de publication de la demande:
25.02.87 Bulletin 87/09

(84) Etats contractants désignés:
AT BE CH DE GB IT LI LU NL SE

(71) Demandeur: APPLICATIONS ET RECHERCHES
ELECTROTECHNIQUES AVANCEES A.R.E.A.
Société Anonyme Monégasque:
2 Boulevard du Jardin Exotique
MC-98000 Monaco(MC)

(72) Inventeur: Ripoll, René Villa No. 1
Résidence Les Marguerites Chemin de
Revoires
La Tubie F-06320 Cap d'Ail(FR)

(74) Mandataire: Thébault, Jean-Louis
Cabinet Jean-Louis Thébault 50, Cours de
Verdun
F-33000 Bordeaux(FR)

(54) **Mécanisme de fond pour pompe volumétrique pour forage profond.**

(57) -L'invention concerne un mécanisme de fond pour pompe volumétrique pour forage profond du type comprenant un mécanisme de surface actionnant, par l'intermédiaire d'une tige de commande (2), un mécanisme de fond formant navette (1), mobile à va-et-vient dans un tube de pompage (9) communiquant à son extrémité inférieure, par l'intermédiaire d'un système à clapet, avec une crépine, caractérisé en ce qu'il est constitué d'un cylindre creux (1) ouvert à ses deux extrémités dont l'une est munie d'un système à clapet (8), ledit cylindre étant fixé à son extrémité supérieure à ladite tige de commande (2), un jeu de l'ordre de 1 à 2 mm environ étant prévu entre le cylindre et le tube de pompage, cependant que sur la surface externe dudit cylindre et/ou la surface interne dudit tube est ménagée au moins une série d'encoches (12) circulaires parallèles, de préférence inclinées et de faibles profondeur et largeur.

-Application aux pompes pour forage profond.

**FIG.1.**

## MECANISME DE FOND POUR POMPE VOLUMETRIQUE POUR FORAGE PROFOND

La présente invention a trait aux pompes volumétriques utilisables en particulier pour le pompage de l'eau dans des puits ou forages profonds.

Ce type de pompe est bien connu et comporte un mécanisme de surface actionnant par l'intermédiaire d'une tige de commande un mécanisme de fond disposé dans un tube de pompage et constitué d'un piston associé à un clapet, ce mécanisme formant navette déplacée à va-et-vient dans le tube de pompage et hissant à chaque ascension une certaine quantité d'eau et propulsant ainsi la colonne d'eau au-dessus du piston vers la surface.

L'étanchéité des pistons équipant la plupart des pompes de ce type actuellement sur le marché est réalisée mécaniquement au moyen d'une pièce en cuir qui frotte sur la paroi du tube de pompage en fonction de la pression d'eau résultant résultant de la profondeur.

Ceci engendre des frottements qui accroissent les efforts forts à exercer sur la tige de commande,ce qui est un handicap notamment pour les pompes à commande manuelle, et provoquent une usure d'autant plus rapide que le forage est profond, ce qui pose des problèmes de coût et de maintenance qui peuvent devenir dissuasifs surtout lorsque de telles pompes doivent être utilisées dans des endroits isolés difficilement accessibles et où il n'y a pas de main d'oeuvre suffisamment qualifiée.

Le but de l'invention est de pallier ces inconvénients en proposant un nouveau type de mécanisme de fond à frottement et usure extrêmement réduits.

A cet effet, l'invention a pour objet un mécanisme de fond pour pompe volumétrique pour forage profond, du type comprenant un mécanisme de surface actionnant par l'intermédiaire d'une tige de commande un mécanisme de fond formant navette, mobile à va-et-vient dans un tube de pompage communiquant à son extrémité inférieure, par l'intermédiaire d'un système à clapet, avec une crépine,caractérisé en ce qu'il est constitué d'un cylindre creux ouvert à ses deux extrémités dont l'une est munie d'un système à clapet, ledit cylindre étant fixé à son extrémité supérieure à ladite tige de commande, un jeu de l'ordre de 1 à 2 mm environ étant prévu entre le cylindre et le tube de pompage, cependant que sur la surface externe dudit cylindre et/ou la surface interne dudit tube est ménagé au moins une série d'encoches circulaires parallèles,de préférence inclinées et de faibles profondeur et largeur.

Un tel agencement assure une bonne étanchéité en limitant les fuites en fonction de la profondeur et réduit de manière remarquable les frottements entre cylindre et tube de pompage. Il présente, par ailleurs, une robustesse à toute épreuve et ne nécessite aucun entretien.

D'autres caractéristiques et avantages ressortiront de la description qui va suivre d'un mode de réalisation du dispositif de l'invention, description donnée à titre d'exemple uniquement et en regard du dessin annexé sur lequel:

-Figure 1 représente une vue en coupe axiale verticale d'un tube de pompage équipé d'une navette conforme à l'invention, et

-Figure 2 est une vue en coupe agrandie d'encoches ménagées dans la paroi externe du cylindre de la navette.

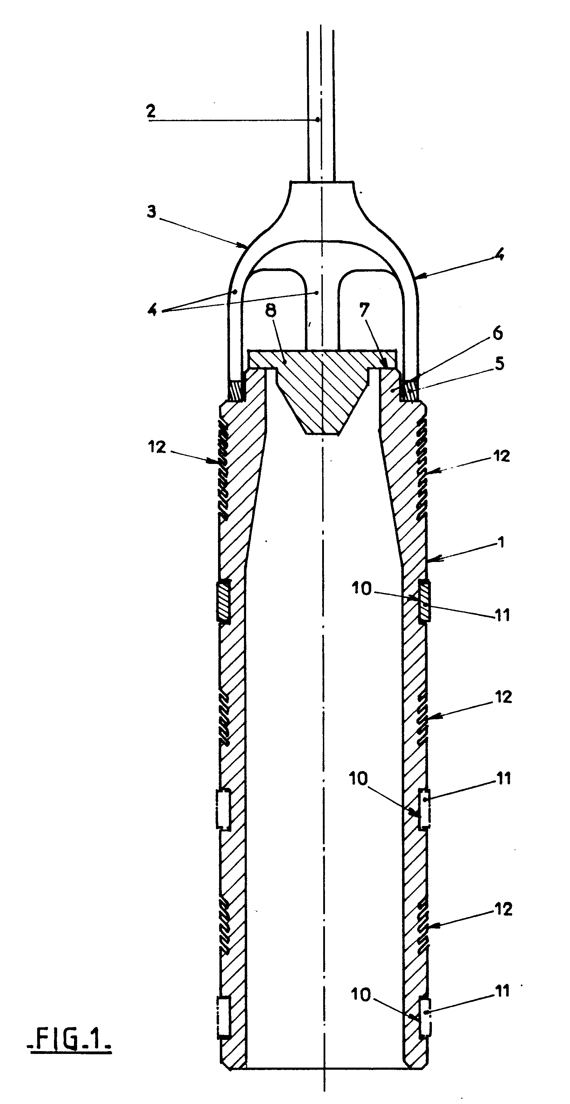

Sur la figure 1 on a représenté en 1 une navette de mécanisme de fond d'une pompe volumétrique pour puits ou forage profond, conforme à l'invention.

Cette navette 1 est constituée d'un cylindre creux en acier inoxydable ou autre matériau ayant subi un traitement anticorrosion approprié ou non susceptible d'être corrodé par l'eau.

Ce cylindre est ouvert à ses deux extrémités, l'extrémité supérieure étant reliée à l'extrémité inférieure de la tige de commande 2 de la pompe.

La tige 2 est avantageusement en fibres de carbone et est reliée au cylindre par un raccord 3 en forme de tulipe à trois branches 4 réunies par une virole 5 vissée sur la face externe d'un prolongement cylindrique 6 de la navette 1, dont le rebord extrême forme un siège annulaire 7 pour un clapet 8 d'obturation de l'extrémité de la navette. Le clapet 8 est libre de se déplacer dans l'espace délimité entre les branches 4 du raccord 3 tout en y étant retenu prisonnier.

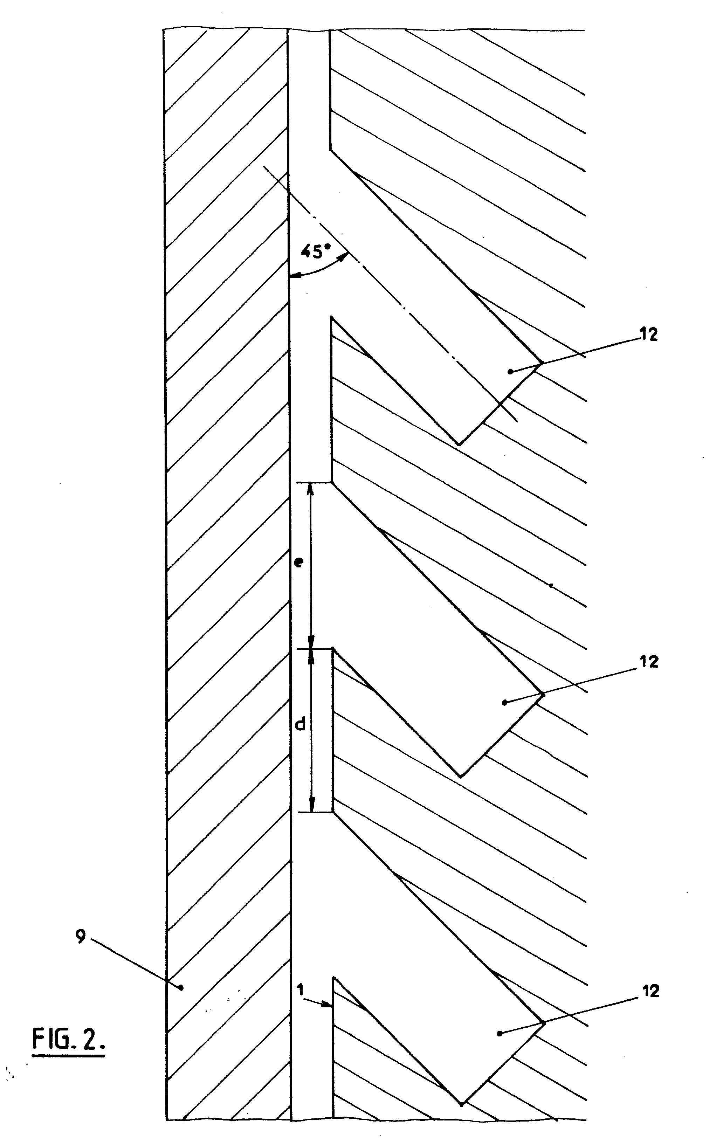

La navette 1 se déplace à va-et-vient dans un tube de pompage cylindrique représenté partiellement en 9 sur la figure 2.

Le diamètre externe du cylindre 1 est par exemple de 70 mm tandis que le diamètre intérieur du tube 9 est de l'ordre de 72 à 74 mm environ.

La hauteur (ou longueur) de la navette est de l'ordre de 240 mm, par exemple, et sa course dans le tube 9 de l'ordre de 150 mm pour une pompe à actionnement manuel par bras de levier.

La paroi externe de la navette 1 est munie, au voisinage de ses extrémités ainsi que dans la partie centrale, d'une gorge circulaire 10 de faible profondeur servant de logement à un guide antifriction 11 en forme de bande mince en nylon par exemple, faisant légèrement saillie hors desdites gorges 10 et ceinturant la navette.

A la surface externe du cylindre 1, au voisinage de l'extrémité supérieure de la navette, ainsi qu'entre les gorges 10, sont ménagées des encoches 12 groupées en séries. Les encoches 12 sont circulaires, parallèles, de même section et indépendantes les unes des autres.

Elles ont, par exemple, comme représenté sur la figure 2, des flancs parallèles, écartés d'une distance de 1 mm environ et inclinés d'environ 45° sur l'axe de la navette 1, les encoches étant tournées vers le haut.

Le fond des encoches est plat et la profondeur moyenne, mesurée dans le plan médian des encoches est de l'ordre de 1,5 mm environ.

Les encoches 12 sont groupées par séries de cinq ou dix, par exemple, et l'intervalle entre deux encoches consécutives est tel que sur une génératrice du cylindre 1 la distance d séparant deux encoches équivaut sensiblement à l'ouverture e d'encoche et est de l'ordre de 1 mm environ.

Du fait des phénomènes hydrostatiques et hydrodynamiques apparaissant au droit des encoches 12, il s'établit dans ces zones, entre la navette 1 et le tube de pompage 9, des contre-pressions, lors de l'ascension de la navette, réparties uniformément tout autour de cette dernière, assurant une très bonne étanchéité, c'est-à-dire limitant efficacement le passage vers le bas en dessous de la navette de l'eau soulevée par cette dernière, et réduisant remarquablement les frottements entre navette et tube.

Les guides 11 sont relativement flottants et n'assurent pas un contact glissant entre navette et tube.

L'ensemble des organes de la navette 1 ne subit pratiquement pas d'usure et ne nécessite donc pas de maintenance périodique ni de réparation sauf cas exceptionnel bien entendu.

La robustesse, l'efficacité et l'absence d'entretien des pompes ainsi équipées caractérisent ainsi de manière tout à fait remarquable ces pompes.

La paroi interne du tube de pompage 9, au droit de la trajectoire de la navette 1, peut aussi comporter des encoches du même type que celles de la navette et également tournées vers le haut. Il est aussi possible de ne prévoir ces encoches que sur le tube de pompage, la paroi externe de la navette étant lisse.

On peut par ailleurs faire varier légèrement diverses caractéristiques physiques des encoches,telles que nombre, répartition, profondeur, largeur, forme, section, espacement entre encoches, inclinaison, ainsi que le jeu entre navette et tube de pompage, sans pour autant sortir du cadre de l'invention, dans la mesure où l'on met en oeuvre les mêmes phénomènes hydrostatiques et hydrodynamiques en vue d'obtenir les mêmes les mêmes effets techniques au plan de l'étanchéité et de la suppression des frottements.

Enfin, les dimensions de la navette (diamètre et longueur) peuvent varier largement suivant la profondeur de puisage, en particulier dans le cas de pompe à actionnement manuel, si l'on veut conserver sur le bras de levier de commande un effort raisonnable de l'ordre d'une dizaine de kg par exemple.

## Revendications

1. Mécanisme de fond pour pompe volumétrique pour forage profond du type comprenant un mécanisme de surface actionnant, par l'intermédiaire d'une tige de commande (2), un mécanisme de fond formant navette (1), mobile à va-et-vient dans un tube de pompage (9) communiquant à son extrémité inférieure, par l'intermédiaire d'un système à clapet, avec une crépine, caractérisé en ce qu'il est constitué d'un cylindre creux (1) ouvert à ses deux extrémités dont l'une est munie d'un système à clapet (8), ledit cylindre étant fixé à son extrémité supérieure à ladite tige de commande (2), un jeu de l'ordre de 1 à 2 mm environ étant prévu entre le cylindre et le tube de pompage, cependant que sur la surface externe dudit cylindre et/ou la surface interne dudit tube est ménagée au moins une série d'encoches (12) circulaires parallèles, de préférence inclinées et de faibles profondeur et largeur.

2. Mécanisme de fond suivant la revendication 1, caractérisé en ce que les encoches sont inclinées d'environ 45 ° sur l'axe de la navette (1) ou du tube de pompage (9) et sont tournées vers le haut.

3. Mécanisme de fond suivant la revendication 1 ou 2, caractérisé en ce que la section des encoches (12) est rectangulaire et les paramètres physiques suivants : largeur, profondeur, espacement entre deux encoches consécutives d'une même série, sont de l'ordre du millimètre.

4. Mécanisme de fond suivant l'une des revendications 1 à 3, caractérisé en ce que le jeu entre la navette (1) et le tube de pompage (9) est de l'ordre de 1 à 2 mm.

FIG.1.

FIG. 2.

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl. 4) |
|---|---|---|---|
| Y | US-A-3 146 725  (HARRIS)<br>* Colonne 3, ligne 11 - colonne 4, ligne 6 *<br><br>--- | 1,3 | F 04 B  21/00<br>F 04 B  21/04<br>F 16 J  15/44 |
| Y | DE-A-2 948 346  (BRUNNER)<br>* Page 6, dernier alinéa - page 7, alinéa 2 *<br><br>--- | 1,3 | |
| A | DE-C-  406 055  (GAILLARD)<br>* En entier *<br><br>--- | 1-4 | |
| A | US-A-2 635 554  (HALEY)<br>* Colonne 1, lignes 17-22 *<br><br>--- | 1 | |
| A | US-A-2 018 204  (EVANS)<br>* Colonne de gauche, lignes 26-39 *<br><br>--- | 1,3 | |
| A | GB-A-  489 469  (BAUER)<br>* En entier *<br><br>--- | 1-4 | |
| A | CH-A-  182 155  (SULZER)<br>* En entier *<br><br>----- | 1,3,4 | |

DOMAINES TECHNIQUES RECHERCHES (Int. Cl.4)

F 04 B
F 16 J

Le présent rapport de recherche a été établi pour toutes les revendications

| Lieu de la recherche | Date d'achèvement de la recherche | Examinateur |
|---|---|---|
| LA HAYE | 27-10-1986 | VON ARX H.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82